# EUROPÄISCHE PATENTSCHRIFT

(11) **EP 3 463 974 B1**
(45) Veröffentlichungstag und Bekanntmachung des Hinweises auf die Patenterteilung: **07.10.2020**
(21) Anmeldenummer: 17724314.4
(22) Anmeldetag: 13.04.2017
(51) Int. Cl.: B60N 2/70, B60N 2/58, B60N 2/64

(54) **SITZLEHNENVERKLEIDUNG UND VERFAHREN ZU DEREN HERSTELLUNG**
BACK REST PANEL AND METHOD FOR PRODUCING SAME
HABILLAGE DE DOSSIER DE SIÈGE ET SON PROCÉDÉ DE FABRICATION

(30) Priorität: 30.05.2016 DE 102016109924
(43) Veröffentlichungstag der Anmeldung: 10.04.2019
(73) Patentinhaber: Ford-Werke GmbH, 50735 Köln (DE)
(72) Erfinder: FORSTHUBER, Gerald, 4020 Linz (AT); JANZEN, Michael, 51061 Köln (DE)
(74) Vertreter: Haseltine Lake Kempner LLP
(86) Internationale Anmeldenummer: PCT/DE2017/100304
(87) Internationale Veröffentlichungsnummer: WO 2017/206974

(56) Entgegenhaltungen:
- JP-A- 2007 082 909
- US-A1- 2006 197 250
- US-A1- 2009 127 912
- US-A1- 2013 127 225
- US-A1- 2014 291 880

## Beschreibung

Die Erfindung betrifft eine Sitzlehnenverkleidung zur Befestigung an einer rückseitigen Sitzstruktur mit einem mehrschichtigen Aufbau sowie ein Verfahren zum Herstellen einer solchen Sitzlehnenverkleidung. Die Erfindung betrifft insbesondere eigenstabile Lehnenverkleidungen für Fahrzeugsitze, die an einer rückseitigen Sitzstruktur befestigt werden können, beispielsweise über reversible, formschlüssige Verbindungselemente oder auch über permanente Verbindungsverfahren. In einer solchen Sitzlehnenverkleidung können auch weitere Funktionsbauteile integriert sein.

Fahrzeuge mit Sitzgelegenheiten weisen in der Regel Sitzlehnen auf, die verkleidet werden, um die in dem Fahrzeugsitzen vorhandene Technik zu schützen und darüber hinaus ein angenehmes optisches Erscheinungsbild sowie zusätzliche Funktionen wie eine Polsterung, Schutz vor Verletzungen oder Unterbringung von Gegenständen bereitzustellen. Dabei sind zur Herstellung von Sitzlehnenverkleidungen unterschiedliche Fertigungsverfahren und Materialkombinationen vorgesehen, um die Sitzstrukturen, die in der Regel aus Metall oder einem ähnlichen formstabilen Material bestehen, nach Abschluss der Polsterung oder des Bezuges rückseitig mit der Verkleidung zu verblenden.

Es sind Textil- oder Lederhussen bekannt, die vollständig die Sitzstruktur umhüllen, sodass die Lehnenverkleidung durch den Sitzbezug selbst ausgebildet wird. Nachteilig an dieser Ausführungsform ist die vergleichsweise geringe Steifigkeit der Sitzlehnenverkleidung, da die Steifigkeit ausschließlich durch die Materialeigenschaftes des Textils oder des Leders der Husse, gegebenenfalls in Verbindung mit einer Polsterung wie Watte oder Vlies definiert ist. Die Anbringung von Funktionsbauteilen, wie zum Beispiel eines Klapptisches, ist nicht möglich.

Weiterhin sind Verkleidungen aus Polymerwerkstoffen, insbesondere Thermoplasten bekannt, die im Rahmen eines Spritzguss- oder Tiefziehverfahrens eine formstabile Verblendung des Übergangs zu einem Bezug und einer rückseitigen Sitzstruktur ausbilden. Nachteilig an solchen Sitzverkleidungen ist, dass eine direkte mechanische Verbindung zwischen dem Bezug und der Sitzlehnenverkleidung nicht möglich ist, sodass es immer zu einer geringen Spaltbildung zwischen den beiden Bauteilen kommt. Solche Bauteile weisen eine vergleichsweise hohe Steifigkeit und Festigkeit auf, die auch bei höheren Temperaturen erhalten bleiben. Bei niedrigen Temperaturen ist eine ausreichende Zähigkeit der Werkstoffe vorhanden. Darüber hinaus ist eine gute Abrieb- und Verschleißfestigkeit erzielbar. Nachteilig ist bei einem Schadensfall eine Bruchneigung und Splitterneigung bei mechanischer Überlastung, wodurch die Verletzungsgefahr für Fahrzeuginsassen, die hinter einer solchen Sitzlehnenverkleidung sitzen, erhöht wird.

Weiterhin sind Sitzlehnenverkleidungen aus Faserpressteilen mit kaschierten Textil- oder Lederbezügen bekannt. Gegenüber Thermoplasten sind Faserpressteile leichter und bei Brüchen kommt es zu keiner scharfkantigen Ausbildung einer Bruchkante. Nachteilig an Faserpressteilen ist, dass die Fasermatte nach dem Verpressen zur Erlangung der endgültigen Geometrie noch beschnitten und mit dem Dekor kaschiert werden muss. Ebenso sind Montagekomponenten auf der Rückseite der Faserplatte anzubringen, beispielsweise aufzukleben, wodurch sich der Herstellungsaufwand durch zumindest einen weiteren Arbeitsschritt erhöht. Durch den erhöhten Arbeitsund Handhabungsaufwand im Fertigungsprozess sind Faserpressteile als Sitzlehnenverkleidungen nicht für Fahrzeuge im High-Volume-Segment geeignet.

Ein weiteres Herstellverfahren für Sitzlehnenverkleidungen sieht vor, dass ein Polyurethanweichschaum auf eine Dekorlage aufgebracht wird. Nach dem Aufsprühen wird die Kontur der Sitzlehnenverkleidung in einem Presswerkzeug durch die Werkzeuggeometrie und das Aushärten des Polyurethans hergestellt. Nach dem Entformen mit der Sitzlehnenverkleidung aus dem Presswerkzeug muss eine Nachbearbeitung stattfinden. Die Befestigung einer solchen Sitzlehnenverkleidung ist sehr aufwändig.

Weiterhin offenbart die Druckschrift JP 2007 082909 A1 einen Polsterkörper, der aus einem Schaumharz hergestellt ist und der mit einer integrierten Verstärkungsschicht versehen ist. Die US2014/291880 zeigt ebenfalls eine Sitzlehnenverkleidung.

Aufgabe der vorliegenden Erfindung ist es, eine Sitzlehnenverkleidung und ein Verfahren zu dessen Herstellung bereitzustellen, mit dem ohne nachzuarbeiten eine eigenstabile Sitzlehnenverkleidung bereitgestellt werden kann, die vielseitig modifizierbar und einfach zu montieren ist.

Erfindungsgemäß wird diese Aufgabe durch eine Sitzlehnenverkleidung mit den Merkmalen des Hauptanspruches und ein Verfahren mit den Merkmalen des nebengeordneten Anspruchs gelöst. Vorteilhafte Ausgestaltungen und Weiterbildungen der Erfindung sind in den Unteransprüchen, der Beschreibung sowie den Figuren offenbart.

Die Sitzlehnenverkleidung zur Befestigung an einer rückseitigen Sitzstruktur mit einem mehrschichtigen Aufbau sieht eine Dekorschicht vor, die im montierten Zustand der Sitzlehnenverkleidung auf der der Sitzstruktur abgewandten Seite angeordnet ist, wobei die Dekorschicht einen Konturzuschnitt aufweist. Eine Versteifungsschicht ist an der der Sitzstruktur zugewandten Seite der Dekorschicht befestigt und wird in eine Schaumstoffschicht, die mit der Dekorschicht verbunden ist, eingebettet. Mit einer solchen Ausgestaltung ist es möglich, eine eigenstabile Sitzlehnenverkleidung bereitzustellen, bei der bereits am Beginn der Prozesskette die Dekorschicht ihren Konturzuschnitt aufweist, bevorzugt den finalen Konturzuschnitt, der beispielsweise durch Ausschneiden oder Ausstanzen erreicht wird. Die Dekorschicht kann aus einem Textil, Leder oder einem Alternativwerkstoff hergestellt sein. Die Verstärkungsschicht wird zur Erhöhung der Steifigkeit und zur Verbesserung der nachhaltigen Formgebung aufgebracht. Anschließend wird auf die Rückseite der Dekorschicht, also auf derjenigen Seite, die im eingebauten Zustand der Sitzlehnenverkleidung nicht dem Insassen zugewandt ist, im Rahmen eines Formschaumverfahrens eine Schaumstoffschicht aufgebracht, sodass einerseits die Schaumstoffschicht mit der Dekorschicht verbunden wird und andererseits die Verstärkungsschicht in der Schaumstoffschicht eingebettet wird. Dadurch wird gleichzeitig die Verstärkungsschicht auf der Dekorschicht fixiert, sofern dies nicht bereits in einem vorgelagerten Arbeitsschritt erfolgt ist. Die Schaum stoffschicht ist insbesondere als Zwei-Komponenten-Weichschaumschicht ausgebildet, die in einem Formschaumwerkzeug gebildet wird und bei der Schaumbildung die Verstärkungsschicht an der Dekorschicht festlegt, ohne dass ein weiterer Klebstoff benötigt oder eingesetzt wird.

Die Verstärkungsschicht weist eine netzartige oder gitterartige Struktur auf, sodass der Schaumstoffwerkstoff durch die von den Gitterstäben oder netzausbildenden Abschnitten umgebenen Freiräume mit dem Material der Dekorschicht in Eingriff treten kann. Dabei kann die Verstärkungsschicht aus einem bevorzugt extrudierten Material bestehen, das eine Biegefestigkeit aufweist, die abweichend von der Biegefestigkeit des Dekormaterials ausgebildet ist. Bevorzugt ist die Verstärkungsschicht steifer als das Dekormaterial, um eine erhöhte Biegefestigkeit und somit eine erhöhte Eigenstabilität bereitzustellen. Es ist möglich und vorgesehen, mehrere Lagen einer Verstärkungsschicht übereinander und auch nur bereichsweise übereinander anzuordnen, um unterschiedliche Biegesteifigkeiten in verschiedenen Gebieten oder in verschiedenen Bereichen der Sitzlehnenverkleidung zu realisieren.

Insbesondere bei einer Ausgestaltung der Dekorschicht aus einem Textil oder einem durchlässigen Werkstoff ist es vorteilhaft, wenn zwischen der Dekorschicht und der Verstärkungsschicht eine Sperrschicht aufgebracht, insbesondere aufgeklebt oder aufkaschiert ist. Eine aufkaschierte Sperrschicht kann beispielsweise vor dem Zuschnitt der Kontur der Dekorschicht auf das Material aufgebracht werden. Bei textilen Werkstoffen kann die Rollenware vor dem Zuschnitt mit der bevorzugt undurchlässigen Sperrschicht kaschiert werden, beispielsweise mittels Folienkaschierung, um einer Diffusion des Werkstoffes des Schaumstoffes, beispielsweise Polyurethan, durch das Gewebe hindurch entgegenzuwirken.

Die Sperrschicht ist bevorzugt vollflächig an der Innenseite der Dekorschicht befestigt, erstreckt sich also über den gesamten Zuschnitt der Dekorschicht, um beispielsweise zusätzlich eine Feuchtigkeitssperre als Funktion der Sitzlehnenverkleidung bereitzustellen.

In einer Weiterbildung der Erfindung sind Einleger wie Spritzgussteile, Vliese, Montageclipse, Plättchen, Verstärkungsteile oder eine Abdeckung für einen Rechner oder Lehnenneigungsversteller. Die Einleger oder Einlegeteile können über Aufnahmedorne in einem Formschaumwerkzeug in der richtigen Position fixiert werden. Ebenso können die Montageclipse oder Plättchen dort fixiert werden, sodass die funktionserweiternden Einlegekomponenten gemeinsam mit der Anbringung der Schaumstoffschicht, insbesondere durch Verschäumen in einem Zwei-Komponenten-Ortsschaumverfahren, an der Sitzlehnenverkleidung fixiert werden können. Dabei werden zwei miteinander reagierende Komponenten in die Form eingebracht, die innerhalb der Form zu einem Schaumstoff reagieren und vor Ort in der Form den Schaumstoff ausbilden oder erzeugen. Es sind somit keine weiteren Arbeitsschritte notwendig, nachdem die Schaumstoffschicht auf der Dekorschicht aufgebracht wurde, um die Sitzlehnenverkleidung fertigzustellen.

Die Schaumstoffschicht besteht vorzugsweise aus einem Polyurethanschaum, der auf der Dekorschicht, gegebenenfalls nach Aufbringen einer Sperrschicht oder einer Folienkaschierung, zusammen mit der Verstärkungsschicht, bevorzugt aus einem Netz- oder Gittermaterial, in eine Formschaumform eingeschäumt wird, um dort die fertige Sitzlehnenverkleidung auszubilden.

Eine Weiterbildung der Erfindung sieht vor, dass die Kontur der Verstärkungsschicht innerhalb der Kontur der Dekorschicht liegt, wobei zwischen der Kontur der Verstärkungsschicht und der Kontur der Dekorschicht ein Rand ausgebildet ist, in dem die Dekorschicht frei von der Verstärkungsschicht ist. Dieser Rand ist zumindest teilweise umlaufend ausgebildet und ermöglicht die Anbringung von Befestigungselementen wie Mikroreißverschlüssen, Klettverschlüssen oder ein niveaugleichen Vernähen mit weiteren Bezügen oder Sitzlehnenkomponenten.

Die Kontur der Schaumstoffschicht kann innerhalb der Kontur der Dekorschicht liegen, wobei zwischen der Kontur der Schaumstoffschicht und der Kontur der Dekorschicht ein Rand ausgebildet ist, der ebenfalls zumindest teilweise umlaufend ausgebildet sein kann. Auch hier ist die Dekorschicht frei von Schaumstoff, um unmittelbar an der Dekorschicht die Befestigungselemente wie Reißverschluss, Formschlusselemente oder eine Naht für ein niveaugleiches Vernähen mit weiteren Komponenten bereitzustellen. Bevorzugt ist der Übergang von der Dekorschicht zu der Schaumstoffschicht geneigt ausgebildet, um einen sanften Übergang von der Dekorschicht zu der Schaumstoffschicht und der Verstärkungsschicht zu ermöglichen.

In der Sitzlehnenverkleidung können Zonen unterschiedlicher Steifigkeit ausgebildet sein. Die Steifigkeit oder Festigkeit der Sitzlehnenverkleidung wird durch das Zusammenwirken mehrerer Komponenten und Faktoren bestimmt, beispielsweise durch die Steifigkeit des Dekormaterials, durch das Material oder die Faden- oder Gitterstärke der Verstärkungsschicht, durch die Maschengröße einer gitterartigen Verstärkungsschicht sowie die Stauchhärte des Polyurethanschaums. Ebenso kann durch zusätzliche Einleger wie Spritzgussteile und/oder Vliese die Steifigkeit der Sitzlehnenverkleidung insgesamt oder auch partiell erhöht werden.

Eine weitere Möglichkeit der Anpassung der Lehnensteifigkeit an die gewünschten Anforderungen besteht darin, auf der Rückseite der Schaumstoffschicht, also derjenigen Seite, die der Dekorschicht abgewandt ist, Verrippungen in dem Formwerkzeug, insbesondere Formschaumwerkzeug vorzunehmen, um eine partielle Schwächung des Schaumstoffes vorzunehmen. Neben einer Anpassung der Festigkeit und Stabilität der Sitzlehnenverkleidung durch Schwächungen in dem Schaumstoff ist es möglich, im Bereich der partiellen Schwächung nachträglich eine Kartentasche aufzunehmen oder einzuarbeiten, ohne die Gesamtdicke der Sitzlehnenverkleidung zu erhöhen. Die Sitzlehnenverkleidung kann nur teilweise mit einer Schaumstoffschicht versehen sein, wenn die teilweise Verschäumung ausreicht, um eine ausreichende Stabilität und Elastizität zu erreichen. Der Schaumstoff dient zur Stabilisierung der Dekorschicht und kann je nach Anwendung und Material der Verstärkungsschicht elastisch oder steif ausgebildet sein. Der Schaumstoff, insbesondere aus Polyurethan, dient auch als Kleber oder Verbindungsmittel, der die jeweiligen Schichten miteinander verbindet und die Zuordnung der Komponenten zueinander herstellt. Durch die Verwendung eines dünnen, biegeschlaffen Dekormaterials, der Verstärkungsschicht und der Schaumstoffschicht können im Vergleich zu herkömmlichen Verkleidungselementen leichtere, preiswertere, elastische und splitterfreie Sitzlehnenverkleidungen hergestellt werden, die keine Nachbearbeitung benötigen.

Das erfindungsgemäße Verfahren zum Herstellen einer wie oben beschriebenen Sitzlehnenverkleidung sieht vor, dass eine Dekorschicht mit einer auf der Rückseite der Dekorschicht angeordneten Verstärkungsschicht in ein Formschaumwerkzeug eingelegt und mit einer Schaumstoffschicht verschäumt wird, sodass die Verstärkungsschicht eingebettet und an der Dekorschicht festgelegt wird. Eingebettet bedeutet, dass die Hauptflächen der Verstärkungsschicht zumindest überwiegend von der Schaumstoffschicht, und ggf. der Dekorschicht abgedeckt sind, die Schmalseiten können freigelassen oder von außen zugänglich sein. Eingebettet ist die Verstärkungsschicht auch, wenn sie allseitig abgedeckt ist. Somit wird über das Einspritzen der Schaumstoffschicht in das Formschaumwerkzeug neben einer Formgebung und Stabilisierung der Dekorschicht die Verstärkungsschicht fixiert und mit der Dekorschicht, gegebenenfalls unter Zwischenschaltung einer Sperrschicht verbunden. Die Verstärkungsschicht ist dann zwischen der Schaumschicht und der Dekorschicht eingelegt und bevorzugt allseitig abgedeckt.

Der Dekorschicht kann in dem Formschaumwerkzeug über Unterdruck gehalten werden, bevor das Schaumstoffmaterial eingeschäumt oder in die Form eingebracht wird. Dadurch ist es möglich, die Dekorschicht, die in ihrem finalen Konturzuschnitt in das Werkzeug eingelegt wurde, dauerhaft zu positionieren und zu fixieren, bis der Schaumstoff eingeschäumt oder eingebracht wird. Durch den Unterdruck folgt der Dekorzuschnitt der Werkzeugkontur, sodass eine der Werkzeugform genau folgende Oberflächenstruktur und Oberflächengestalt der Dekorschicht erzielt werden kann.

Einleger können in das Formschaumwerkzeug vor dem Verschäumen der Schaumstoffschicht eingelegt werden, um zusätzliche Funktionen oder Montageelemente, Verstärkungselemente oder Abdeckungen für Komponenten in der Sitzstruktur bereitzustellen. Dadurch wird vermieden, dass nach dem Aufbringen eines Schaumstoffwerkstoffes weitere Arbeitsschritte zur Endbearbeitung und Fertigstellung einer Sitzlehnenverkleidung anfallen.

Eine Weiterbildung der Erfindung sieht vor, dass an dem Übergang von der Verstärkungsschicht zu der Dekorschicht eine Dichtung in dem Formschaumwerk zeug positioniert wird, um die Dekorschicht bereichsweise von der Schaumstoffschicht freizustellen. Durch die Dichtung wird verhindert, dass das Schaumstoffmaterial, insbesondere das Polyurethan, bis zum äußeren Rand des Konturzuschnittes der Dekorschicht vordringt. Bevorzugt ist die Dichtung so ausgebildet, dass der Polyurethanauftrag oder Schaumstoffauftrag abflachen kann, sodass ohne Stufenbildung das Schaumstoffmaterial zur Dekorschicht hin ausläuft. Eine solche Art abgeflachter, stufenfreier Übergang von der Dekorschicht zu dem Schaumstoff ermöglicht einen gleichmäßigen Übergang, sodass ein direktes, niveaugleiches Vernähen mit dem übrigen Bezug oder eine Anbringung eines Mikroreißverschlusses, eines Klettverschlusses oder dergleichen zur Verbindung mit dem übrigen Bezug stattfinden kann.

Nachfolgend werden Ausführungsbeispiele der Erfindung anhand der beigefügten Figuren näher erläutert. Es zeigen:
- Figur 1: eine Sitzlehnenverkleidung;
- Figur 2: einen Schichtaufbau einer Sitzlehnenverkleidung vor dem Fügen;
- Figur 3: einen Schichtaufbau einer fertiggestellten Sitzlehnenverkleidung im Querschnitt;
- Figur 4: eine perspektivische Darstellung des Schichtaufbaus;
- Figur 4a: eine Variante der Figur 4 mit Einleger;
- Figur 5: ein geöffnetes Formwerkzeug für eine Sitzlehnenverkleidung in perspektivischer Darstellung;
- Figur 6: eine Schnittdarstellung durch ein geschlossenes Formwerkzeug; sowie
- Figur 7: eine Detailansicht der Figur 6.

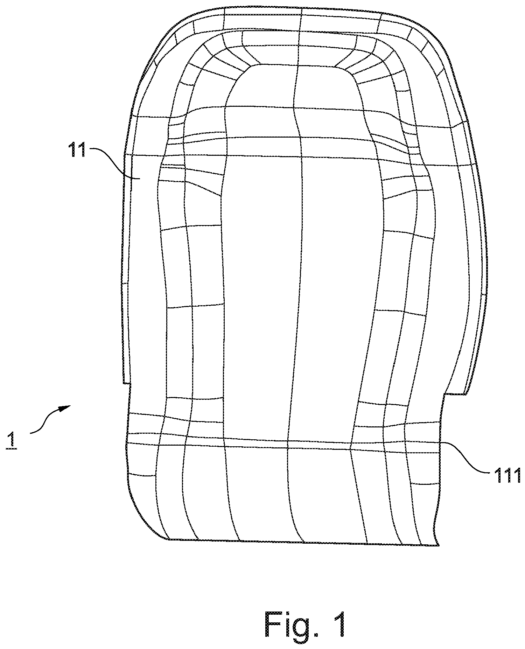

Figur 1 zeigt in einer Gesamtdarstellung eine Sitzlehnenverkleidung 1, bei der die Dekorschicht 11 zu sehen ist. Die Dekorschicht 11 besteht aus einem Textil, einem Leder, einem Lederimitat oder einem ähnlichen Material, das auf der Außenseite die gewünschte Struktur und Anmutung aufweist und dem Nutzer, beispielsweise einem hinter dem Sitz befindlichen Nutzer zugewandt ist. Die Dekorschicht 11 ist aus einem finalen Konturzuschnitt 111 hergestellt, der nach seinem Zuschnitt auf der Rückseite, also derjenigen Oberfläche, die einer Sitzstruktur zugewandt und einem hinter dem Sitz sitzenden Nutzer abgewandt ist, beschichtet ist. Die Sitzlehnenverkleidung 1 ist ausreichend eigenstabil, um weitere Funktionselemente aufnehmen zu können, beispielsweise können daran Taschen oder gegebenenfalls Klapptische befestigt werden. Die Oberflächenkontur ist dabei dreidimensional gewölbt, um beispielsweise an den äußeren Bereichen einen Sitzrahmen der Sitzstruktur zu umgeben und den dazwischen liegenden Freiraum mit einer Wölbung auszufüllen, sodass ein Fondnutzer eine größere Kniefreiheit erhält. Die Sitzlehnenverkleidung 1 wird über nicht dargestellte Befestigungselemente, beispielsweise einen Reißverschluss, Mikroreißverschluss, Klettverschlüsse oder Montageklipse an der nicht dargestellten Sitzstruktur oder einer Sitzpolsterung oder Sitzverkleidung befestigt. Ebenso kann die Sitzlehnenverkleidung 1 eingeklemmt werden oder aus einer Kombination einer klemmenden und formschlüssigen Halterung an dem übrigen Sitz oder übrigen Sitzverkleidung festgelegt werden.

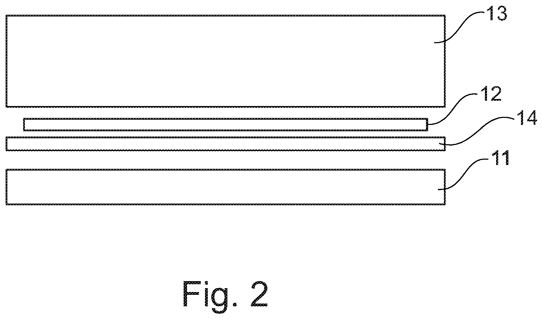

Figur 2 zeigt den Schichtaufbau einer Sitzlehnenverkleidung im Querschnitt. Die Dekorschicht 11 ist als unterste, durchgängige Schicht gezeigt. Auf der Innenseite oder Rückseite der Dekorschicht 11 kann eine Sperrschicht 14 angeordnet sein, die insbesondere dann notwendig ist, wenn das Material der Dekorschicht 11 durchlässig ist, beispielsweise in Gestalt eines Textils, Gewebes, Gewirkes oder dergleichen. Die Sperrschicht 14 kann auf der Dekorschicht 11 aufkaschiert werden, um eine geschlossene oder nahezu geschlossene Oberfläche bereitzustellen, sodass verhindert wird, dass bei dem Aufbringen weiterer Schichten eine Beeinträchtigung der äußeren Oberfläche der Dekorschicht 11 stattfindet, beispielsweise durch Durchdringung von Material der hinteren Schichten an die Außenseite oder sichtbare Oberfläche der Dekorschicht 11.

Entweder unmittelbar auf die Dekorschicht 11 oder, sofern eine Sperrschicht 14 vorhanden ist, auf die Sperrschicht 11 direkt wird eine Verstärkungsschicht 12 aufgebracht, die zu einer vergrößerten Stabilität und Haltbarkeit der Dekorschicht 11 beiträgt. Der Figur 2 ist zu entnehmen, dass die Verstärkungsschicht 12 sich nicht über die komplette Breite der Dekorschicht 11 erstreckt, sondern schmaler ist. Dies hat zur Folge, dass die Außenkontur der Verstärkungsschicht 12 innerhalb der Außenkontur der Dekorschicht 11 und gegebenenfalls der Sperrschicht 14 liegt. Somit bildet sich ein Rand um die Verstärkungsschicht 12 aus, innerhalb dessen die Dekorschicht 11 nicht mit einer Verstärkungsschicht 12 versehen ist. Der Rand kann umlaufend oder unterbrochen ausgebildet sein, die Randbreite kann variieren und zwischen null Millimeter und zehn Millimeter betragen.

Auf der der Dekorschicht 11 abgewandten Seite der Verstärkungsschicht 12 ist eine Schaumstoffschicht 13 angeordnet, über die die notwendige Dicke der Sitzlehnenverkleidung, eine polsternde Wirkung sowie eine zusätzliche Verstärkung und Versteifung bereitgestellt wird. Innerhalb der Schaumstoffschicht 13 können Funktionselemente, beispielsweise Montageclipse, Verstärkungselemente, Ausnehmungen oder Halterungen angeordnet sein.

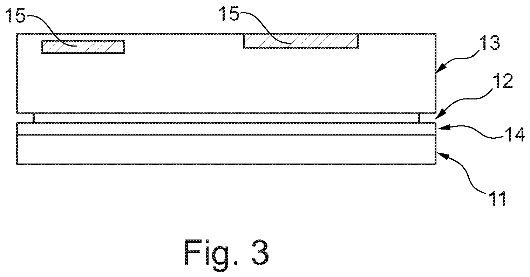

Figur 3 zeigt den Schichtaufbau einer Sitzlehnenverkleidung im Querschnitt im fertiggestellten Zustand. Unten und an der Außenseite ist die Dekorschicht 11 angeordnet, auf der die Sperrschicht 14 aufkaschiert ist. Von der Kontur zurückgesetzt ist die Verstärkungsschicht 12 auf der Sperrschicht 14 positioniert und wird über die Schaumstoffschicht 13, die mit der Sperrschicht 14 und der Verstärkungsschicht 12 oder, wenn ein direkter Auftrag auf der Dekorschicht 11 erfolgt, mit der Dekorschicht 11 unmittelbar verbunden, sodass die Verstärkungsschicht 12 eingebettet ist. Dies bedeutet, dass die Oberseite und die Unterseite oder die Hauptflächen der Verstärkungsschicht 12 von der Schaumstoffschicht 13 alleine oder von der Schaumstoffschicht 13 in Verbindung mit der Sperrschicht 14 oder gegebenenfalls der Dekorschicht 11 abgedeckt sind. An den Schmalseiten der Verstärkungsschicht 12 muss keine vollständige Abdeckung durch die Schaumstoffschicht 13 erfolgen. Auch die Schaumstoffschicht 13 kann eine Kontur aufweisen, die kleiner als die Kontur der Dekorschicht 11 ist, dies wird später näher erläutert. In der Schaumstoffschicht 13 sind Einleger 15 angeordnet, die entweder vollständig von dem Schaumstoff umgeben sind, wie z.B. in der linken Darstellung gezeigt, oder rückseitig mit der Schaumstoffschicht abschließen, wie in der rechten Darstellung zu erkennen ist, so dass der Einleger 15 von hinten zugänglich ist.

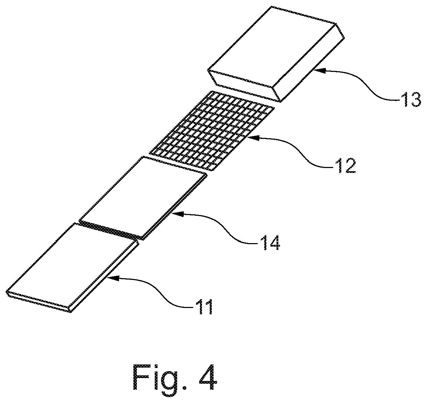

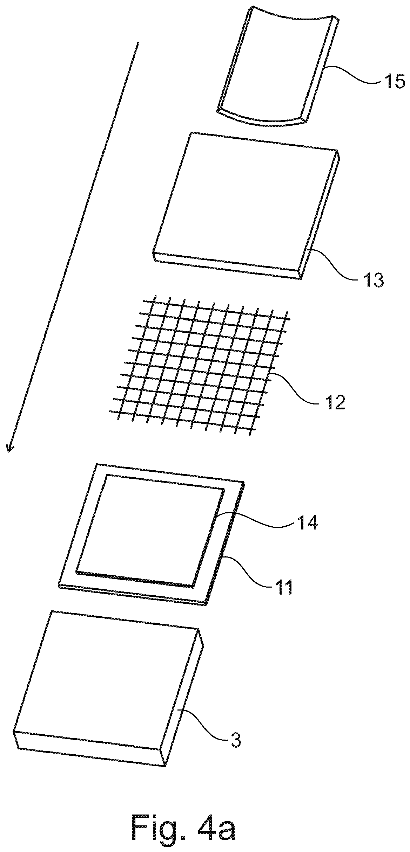

Figur 4 zeigt noch einmal den grundsätzlichen Schichtaufbau einer Sitzlehnenverkleidung mit einer außenliegenden Dekorschicht 11, einer darauf angeordneten, aufkaschierten Sperrschicht 14, die auch vor dem finalen Konturzuschnitt auf das Material der Dekorschicht 11 aufgebracht werden kann, sodass das Material der Dekorschicht 11 als Rollenware mit einer Kaschierung, insbesondere Folienkaschierung versehen, verarbeitet werden kann.

Auf die Sperrschicht 14, soweit erforderlich, wird zumindest eine Verstärkungsschicht 12 aufgebracht, die im dargestellten Ausführungsbeispiel als Gitter oder Netz ausgebildet ist. Die Gitterstruktur oder Netzstruktur kann durch ein Extrusionsverfahren erzeugt werden, ebenso ist es möglich, mehrere Verstärkungsschichten 12 übereinander anzuordnen oder auch nur bereichsweise auf der Oberfläche innerhalb der Kontur der Dekorschicht 11 anzuordnen, um nur eine bereichsweise Verstärkung oder eine bereichsweise unterschiedliche Verstärkung der Dekorschicht 11 bereitzustellen.

Oberhalb der Verstärkungsschicht 12 oder der Verstärkungsschichten 12 wird eine Schaumstoffschicht 13 positioniert, die im Wesentlichen der Kontur der Verstärkungsschicht 12 entspricht und eine Dicke aufweist, die notwendig ist, um die gewünschte Stabilität und Steifigkeit der Sitzlehnenverkleidung bereitzustellen, eine ausreichende Polsterwirkung zu erreichen und gegebenenfalls notwendige Komponenten darin unter zu bringen. Die Verstärkungsschicht 12 oder die Verstärkungsschichten 12 werden von der Schaumstoffschicht 13 umgeben, bevorzugt wird die Schaumstoffschicht 13 im Rahmen eines Einschäumverfahrens aufgebracht. Im Rahmen des Aufbringens der Schaumstoffschicht 13, die vorzugsweise aus einem Polyurethanwerkstoff besteht, wird die Verstärkungsschicht 12 mit der Dekorschicht 11 und der Schaumstoffschicht 13 verbunden und bei einer netzartigen Ausgestaltung der Verstärkungsschicht 12 darin eingebettet, indem die Schaumstoffschicht 13 die Freiräume zwischen den Stegen oder Netzlinien durchdringt.

Figur 4a zeigt eine Variante der Erfindung, bei der die Sitzlehnenverkleidung entsprechend hergestellt wird, wobei in der Schaumstoffschicht 13 ein Einleger 15 eingebettet wird. Zunächst werden die Dekorschicht 11, ggf. mit der Sperrschicht 14, und die Verstärkungsschicht 12 auf ein Unterwerkzeug 3 eines Formschaumwerkzeuges gelegt und dort fixiert, z.B. über Unterdruck oder mechanische Halter. Der Einleger 15 wird entweder auf die Verstärkungsschicht 12 aufgelegt oder an einem nicht dargestellten Oberwerkzeug fixiert. Die Form wird dann geschlossen und die Schaumstoffschicht 13 erzeugt, beispielsweise durch Einfüllen oder Einpressen von Schaumgrundmaterialen oder Komponenten, die in der Form miteinander reagieren und den Schaumstoff ausbilden. Der Schaumstoff durchdringt die Verstärkungsschicht 12, verbindet sich mit der Dekorschicht 11 und fixiert den oder die Einleger 15. Die Verstärkungsschicht 12 und/oder der oder die Einleger 15 können in der Form fixiert gehalten werden, wenn das Schaumstoffmaterial aufschäumt oder sich verfestigt, um zu verhindern, dass eine Positionsveränderung eintritt. Dazu können Niederhalter, Pins, Stifte, Haken, Kegel oder dergleichen in der Form angeordnet sein.

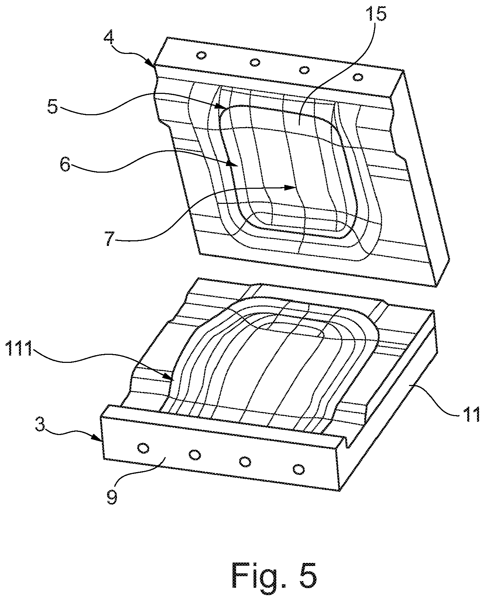

In der Figur 5 ist ein Formwerkzeug ähnlich einem Spritzgießwerkzeug zum Herstellen der erfindungsgemäßen Sitzlehnenverkleidung in einer geöffneten Stellung in einer perspektivischen Ansicht gezeigt. Das Formwerkzeug besteht aus einem Unterwerkzeug 3 und einem Oberwerkzeug 4. In dem Unterwerkzeug 3 ist ein Konturzuschnitt 111 der Dekorschicht 11 eingelegt. Zur besseren Sichtbarkeit ist nur die Kontur gezeigt. Innerhalb des Unterwerkzeuges 3 sind Anschlüsse für eine Absaugeinrichtung angeordnet, um ein Unterdruck zu erzeugen, sodass die Dekorschicht 11 möglichst vollflächig an die Kontur des Unterwerkzeuges 3 herangezogen wird, um ein möglichst faltenfreies Anliegen der Dekorschicht 11 auf der Oberfläche des Unterwerkzeuges 3 zu erreichen. Dadurch wird sichergestellt, dass die Form der Sitzlehnenverkleidung 1 der Form des Unterwerkzeuges 3 entspricht.

An dem Unterwerkzeug 3 sind Einrichtungen zur Temperierung sowie eine Fixiereinrichtung 9 zur Fixierung der Dekorschicht 11 und als Schaumabdichtung angeordnet. Darüber hinaus befinden sich an dem Unterwerkzeug 3 die üblichen Null auflagen und Anschlüsse für eine Vakuumversorgung, über die in der Oberfläche des Unterwerkzeugs 3 angeordneten Siebdüsen, über die Unterdruck angelegt wird, mit dem Vakuum beaufschlagt werden.

Das Oberwerkzeug 4 weist eine Oberflächenkontur auf, die der Oberfläche und Oberflächenkontur und -struktur der Rückseite der Sitzlehnenverkleidung 1 entspricht. Im geschlossenen Zustand ist zwischen dem Oberwerkzeug und dem Unterwerkzeug ein Hohlraum oder Formraum ausgebildet, in den der Schaumwerkstoff, im dargestellten Ausführungsbeispiel ein Polyurethanschaum, durch einen Anguss 7 eingeschäumt wird. In dem Oberwerkzeug ist eine Fixierungseinrichtung 5 für Formschaumeinleger angeordnet oder ausgebildet. Im dargestellten Ausführungsbeispiel die Fixiereinrichtung 5 in Gestalt eines Vakuumfeldes ausgebildet, sodass über Unterdruck der jeweilige Einleger 15, beispielsweise ein Verstärkungselement, eine Montagehilfe, Anschlusselemente oder sonstige Einrichtungen, in der gewünschten Position an dem Oberwerkzeug 4 gehalten wird. Weiterhin können in dem Oberwerkzeug 4 Fixierelemente 6 in Gestalt von Nadeln oder Kegel angeordnet sein, um beispielsweise ein zusätzlich aufgebrachtes Verstärkungsvlies, den oder die Einleger 15 oder aber auch die Verstärkungsschicht 12 ortsfest zu halten.

Zur Herstellung der Sitzlehnenverkleidung 1 wird zunächst in das Unterwerkzeug der finale Konturzuschnitt 111 der Dekorschicht eingelegt und über Vakuumdüsen und gegebenenfalls die Dichtung 9 auf und in dem Unterwerkzeug 3 gehalten. Ein Spritzgusseinleger 15 kann in dem Vakuumfeld 5 befestigt werden, darüber hinaus kann die Verstärkungslage 12 an den Fixierelementen 6 in dem Oberwerkzeug befestigt werden, alternativ dazu kann die Verstärkungsschicht 12 auch auf die Dekorschicht 11 aufgelegt werden. Nach dem sämtliche Verstärkungsschichten 12, Einleger 15, Montageelemente oder andere funktionsrelevanten Komponenten in dem Werkzeug eingebracht sind, wird das Formschaumwerkzeug geschlossen, sodass das Oberwerkzeug 4 auf dem Unterwerkzeug 3 aufliegt. Es bildet sich ein Formhohlraum zwischen Oberwerkzeug 4 und dem Unterwerkzeug 3 aus, der durch Einspritzen, Einschäumen oder Einpressen eines Schaumwerkstoffes, bevorzugt Polyurethanschaum, aufgefüllt wird. Der Schaumstoff wird durch einen zentralen Anguss 7 oder Einlass in die Form eingebracht. Insbesondere bei einer Fixierung der Verstärkungsschicht 12 an dem Oberwerkzeug 4 durchdringt der Schaumwerkstoff die Verstärkungsschicht 12 und bettet diese vollständig in dem Schaumwerkstoff ein. Grundsätzlich ist es auch möglich, dass durch Aufbringen des Schaumwerkstoffes auf die Dekorschicht 1,1, auf der die Verstärkungsschicht 12 angeordnet ist, eine Verbindung über den Schaumwerkstoff hergestellt wird. Am Ende des Formschaumverfahrens ist die Dekorschicht 11 mit der Schaumstoffschicht 13 und der Verstärkungsschicht 12 verbunden, nach dem Entformen der Sitzlehnenverkleidung ist keine Nacharbeit mehr notwendig.

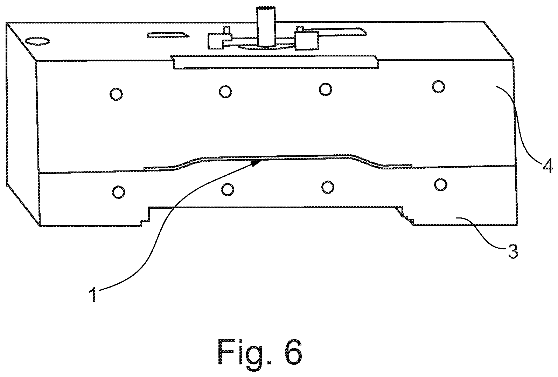

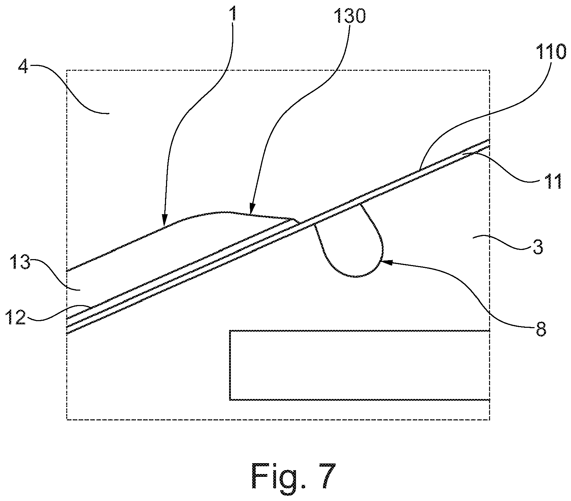

Figur 6 zeigt den Zustand des geschlossenen Werkzeuges in einer Querschnittsansicht. Zwischen dem Oberwerkzeug 4 und dem Unterwerkzeug 3 ist ein Formhohlraum ausgebildet, in dem sich die Sitzlehnenverkleidung 1 befindet. Figur 7 zeigt eine Detailansicht des geschlossenen Werkzeuges, aus der zu erkennen ist, dass die Dekorschicht 11 in einem Randbereich 110 zwischen dem Oberwerkzeug 4 und dem Unterwerkzeug 3 eingeklemmt ist, so dass dort kein Schaumwerkstoff auf der inneren Oberfläche der Dekorschicht 11 aufgebracht werden kann. Auf der Außenseite befindet sich eine Dichtung 8, die zur Fixierung und Abdichtung der Oberfläche der Dekorschicht 11 dient. Zur Innenseite, also vom Rand oder der Kontur der Dekorschicht 11, hin wird dann die Schaumstoffschicht 13 in einem sanften Übergang angeformt. Die eingebettete Verstärkungsschicht 12, die in der Schaumschicht 13 vollständig eingebettet, also vollständig umschlossen ist, ist ebenso zu erkennen wie die Schräge oder Verjüngung der Schaumstoffschicht 13 zum Rand der Dekorschicht 11 hin, um einen stufenlosen Übergang und ein niveaugleiches Vernähen oder Anbringen weitere Befestigungselemente an der Dekorschicht zu ermöglichen.

## Patentansprüche

1. Sitzlehnenverkleidung (1) zur Befestigung an einer rückseitigen Sitzstruktur (2) mit einem mehrschichtigen Aufbau mit:
einer Dekorschicht (11), die im montierten Zustand der Sitzlehnenverkleidung (1) auf der der Sitzstruktur (2) abgewandten Seite angeordnet ist und die einen Konturzuschnitt (111) aufweist,
zumindest einer Verstärkungsschicht (12), die an der der Sitzstruktur (2) zugewandten Seite des Dekorschicht (11) befestigt ist und einer auf der Verstärkungsschicht (12) angeordneten Schaumstoffschicht (13), die mit der Dekorschicht (11) verbunden ist und in die die Verstärkungsschicht (12) eingebettet ist,
wobei die Verstärkungsschicht (12) eine netzartige oder gitterartige Struktur aufweist.

2. Sitzlehnenverkleidung nach Anspruch 1,
**dadurch gekennzeichnet, dass**
die Verstärkungsschicht (12) aus einem Material mit einer Biegefestigkeit abweichend von der Biegefestigkeit des Dekormaterials ausgebildet ist.

3. Sitzlehnenverkleidung nach Anspruch 1 oder 2,
**dadurch gekennzeichnet, dass**
zwischen der Dekorschicht (11) und der Verstärkungsschicht (12) eine Sperrschicht (14) aufgebracht ist.

4. Sitzlehnenverkleidung nach Anspruch 3,
**dadurch gekennzeichnet, dass**
die Sperrschicht (14) vollflächig an der Innenseite der Dekorschicht (11) befestigt ist.

5. Sitzlehnenverkleidung nach einem der voranstehenden Ansprüche, **dadurch gekennzeichnet, dass**
Einleger (15) in der Schaumstoffschicht (13) angeordnet sind.

6. Sitzlehnenverkleidung nach einem der voranstehenden Ansprüche, **dadurch gekennzeichnet, dass**
die Schaumstoffschicht (13) aus einem Polyurethanschaum ausgebildet ist.

7. Sitzlehnenverkleidung nach einem der voranstehenden Ansprüche,
**dadurch gekennzeichnet, dass**
die Kontur der Verstärkungsschicht (12) innerhalb der Kontur der Dekorschicht (11) liegt und zwischen der Kontur der Verstärkungsschicht (12) und der Kontur der Dekorschicht (11) ein Rand (110) ausgebildet ist.

8. Sitzlehnenverkleidung nach einem der voranstehenden Ansprüche,
**dadurch gekennzeichnet, dass**
die Kontur der Schaum Stoffschicht (13) innerhalb der Kontur der Dekorschicht (11) liegt und zwischen der Kontur der Schaumstoffschicht (13) und der Kontur der Dekorschicht (11) ein Rand (110) ausgebildet ist.

9. Sitzlehnenverkleidung nach einem der voranstehenden Ansprüche,
**dadurch gekennzeichnet, dass**
Zonen unterschiedlicher Steifigkeit in der Sitzlehnenverkleidung (1) ausgebildet sind.

10. Verfahren zum Herstellen einer Sitzlehnenverkleidung nach einem der voranstehenden Ansprüche,
**dadurch gekennzeichnet, dass**
eine Dekorschicht (11) mit einer auf der Rückseite der Dekorschicht (11) angeordneten Verstärkungsschicht (12) in ein Formschaumwerkzeug (3, 4) eingelegt und mit einer Schaumstoffschicht (13) verschäumt wird, so dass die Verstärkungsschicht (12) eingebettet und an der Dekorschicht (11) festgelegt wird.

11. Verfahren nach Anspruch 10, **dadurch gekennzeichnet, dass**
zwischen der Dekorschicht (11) und der Verstärkungsschicht (12) eine Sperrschicht (14) angeordnet wird.

12. Verfahren nach einem der Ansprüche 10 oder 11,
**dadurch gekennzeichnet, dass**
der Dekorzuschnitt (11) in dem Formschaumwerkzeug (3, 4) über Unterdruck gehalten wird.

13. Verfahren nach einem der Ansprüche 10 bis 12,
**dadurch gekennzeichnet, dass**
Einleger (15) in das Formschaumwerkzeug (3, 4) vor dem Verschäumen der Schaumstoffschicht (13) eingelegt werden.

14. Verfahren nach einem der Ansprüche 10 bis 13,
**dadurch gekennzeichnet, dass**
am Übergang von der Verstärkungsschicht (12) zu der Dekorschicht (11) eine Dichtung (8) in dem Formschaumwerkzeug (3, 4) positioniert wird, um die Dekorschicht (11) bereichsweise von der Schaumstoffschicht (13) freizustellen.

## Claims

1. Backrest trim (1) to be fastened to a rear-side seat structure (2) having a multilayer construction with:
a decorative layer (11) that is arranged on the side facing away from the seat structure (2) in the assembled state of the backrest trim (1), and which has a contour cut (111),
at least one reinforcing layer (12), which is fastened to the side of the decorative layer (11) facing the seat structure (2) and a foam layer (13) arranged on the reinforcing layer (12), which is connected to the decorative layer (11) and embedded in the reinforcing layer (12),
whereby
the reinforcing layer (12) has a net-like or lattice-like structure.

2. Backrest trim according to claim 1,
**characterised in that**
the reinforcing layer (12) is formed of a material having a bending strength different from the bending strength of the decorative material.

3. Backrest trim according to claim 1 or 2,
**characterised in that**
a barrier layer (14) is applied between the decorative layer (11) and the reinforcing layer (12).

4. Backrest trim according to claim 3,
**characterised in that**
the barrier layer (14) is attached over the entire surface on the inside of the decorative layer (11).

5. Backrest trim according to one of the preceding claims, **characterised in that** inserts (15) are arranged in the foam layer (13).

6. Backrest trim according to one of the preceding claims, **characterised in that** the foam layer (13) is formed from a polyurethane foam.

7. Backrest trim according to one of the preceding claims,
**characterised in that**
the contour of the reinforcing layer (12) is located within the contour of the decorative layer (11) and an edge (110) is formed between the contour of the reinforcing layer (12) and the contour of the decorative layer (11).

8. Backrest trim according to one of the preceding claims,
**characterised in that**
the contour of the foam material layer (13) is located within the contour of the decorative layer (11) and an edge (110) is formed between the contour of the foam layer (13) and the contour of the decorative layer (11).

9. Backrest trim according to one of the preceding claims,
**characterised in that**
areas of different stiffness are formed in the backrest trim (1).

10. Method for producing a backrest trim according to one of preceding claims,
**characterised in that**
a decorative layer (11) having a reinforcing layer (12) arranged on the back of the decorative layer (11) is inserted into a foam mould (3, 4) and foamed with a foam layer (13) so that the reinforcing layer (12) is embedded and is fastened into the decorative layer (11).

11. Method according to claim 10, **characterised in that** a barrier layer (14) is arranged between the decorative layer (11) and the reinforcing layer (12).

12. Method according to one of the claims 10 or 11,
**characterised in that**
the decorative blank (11) is held in the foam mould (3, 4) by negative pressure.

13. Method according to one of the claims 10 to 12,
**characterised in that**
inserts (15) are inserted into the foam mould (3, 4) before foaming the foam layer (13).

14. Method according to one of the claims 10 to 13,
**characterised in that**
a seal (8) is positioned in the foam mould (3, 4) at the transition from the reinforcing layer (12) to the decorative layer (11), so that the decorative layer (11) is partially separated from the foam layer (13).

## Revendications

1. Housse de dossier de siège (1) pour fixation à une structure de siège arrière (2) avec une structure multicouche avec:
une couche décorative (11) qui, à l'état assemblé de la housse de dossier (1), est disposée du côté opposé à la structure de siège (2) et qui présente une découpe de contour (111), au moins une couche de renfort (12) qui est fixée à la structure de siège (2) sur le côté de la couche décorative (11) et une couche de mousse (13) disposée sur la couche de renfort (12), qui est reliée à la couche décorative (11) et intégrée dans la couche de renfort (12),
dans laquelle
la couche de renfort (12) a une structure en forme de filet ou en forme de grille.

2. Housse de dossier de siège selon la revendication 1, **caractérisée en ce que** la couche de renfort (12) est en matériau ayant une résistance à la flexion différente de la résistance à la flexion du matériau décoratif.

3. Housse de dossier de siège selon la revendication 1 ou 2, **caractérisée en ce qu'**une couche barrière (14) est appliquée entre la couche décorative (11) et la couche de renfort (12).

4. Housse de dossier de siège selon la revendication 3, **caractérisée en ce que** la couche barrière (14) est fixée sur toute la surface à l'intérieur de la couche décorative (11).

5. Housse de dossier de siège selon l'une quelconque des revendications précédentes, **caractérisée en ce que** des inserts (15) sont disposés dans la couche de mousse (13).

6. Housse de dossier de siège selon l'une quelconque des revendications précédentes, **caractérisée en ce que** la couche de mousse (13) est formée d'une mousse de polyuréthane.

7. Housse de dossier de siège selon l'une quelconque des revendications précédentes, **caractérisée en ce que** le contour de la couche de renfort (12) se situe à l'intérieur du contour de la couche décorative (11) et un bord (110) est formé entre le contour de la couche de renfort (12) et le contour de la couche décorative (11).

8. Housse de dossier de siège selon l'une quelconque des revendications précédentes, **caractérisée en ce que** le contour de la couche de mousse (13) se situe à l'intérieur du contour de la couche décorative (11) et un bord (110) est formé entre le contour de la couche de mousse (13) et le contour de la couche décorative (11).

9. Housse de dossier de siège selon l'une quelconque des revendications précédentes, **caractérisée en ce que** des zones de raideur différente sont formées dans la housse de dossier de siège (1).

10. Procédé de fabrication d'une housse de dossier de siège selon l'une quelconque des revendications précédentes, **caractérisé en ce qu'**une couche décorative (11) avec une couche de renfort (12) disposée à l'arrière de la couche décorative (11) est insérée dans une structure en mousse moulée (3, 4) et moussée avec une couche de mousse (13) de sorte que la couche de renfort (12) soit intégrée et fixée à la couche décorative (11).

11. Procédé selon la revendication 10, **caractérisé en ce qu'**une couche barrière (14) est disposée entre la couche décorative (11) et la couche de renfort (12).

12. Procédé selon l'une quelconque des revendications 10 ou 11, **caractérisé en ce que** la couche décorative (11) est maintenu dans la structure en mousse moulée (3, 4) au moyen d'une dépression.

13. Procédé selon l'une quelconque des revendications 10 à 12, **caractérisé en ce que** des inserts (15) sont insérés dans la structure en mousse moulée (3, 4) avant le moussage de la couche de mousse (13).

14. Procédé selon l'une quelconque des revendications 10 à 13, **caractérisé en ce qu'**un joint (8) est positionné dans la structure en mousse moulée (3, 4) à la transition de la couche de renfort (12) à la couche décorative (11), afin de libérer la couche décorative (11) de la couche de mousse (13) dans certaines zones.
